# EUROPEAN PATENT APPLICATION

(11) **EP 3 453 678 A1**
(43) Date of publication of application: **13.03.2019**
(21) Application number: 17190285.1
(22) Date of filing: 11.09.2017
(51) Int. Cl.: C01F 7/06, C22B 3/08, C22B 3/44

(54) **TREATMENT AND DISPOSAL OF BAUXITE RESIDUE**

(71) Applicant: Canbekte, Hüsnü Sinan, 34357 Istanbul (TR)
(72) Inventor: CANBEKTE, Zekeriya, 34357 Istanbul (TR)
(74) Representative: Goddar, Heinz J.

(57) **Abstract**

The present invention relates to a method for treating residue generated in a process for obtaining alumina (Al₂O₃) as well as caustic soda from bauxite residue, hereinafter "bauxite residue", to facilitate its disposal as non-hazardous waste. The method further enables recovery of alumina from bauxite residue. Particularly, the bauxite residue is that generated in the Bayer process for obtaining alumina from bauxite, which is also known as "red mud". The method involves treating the bauxite residue with phosphoric acid and then with caustic soda.

## Description

### Technical field of the invention

The present invention relates to a method for treating residue generated in a process for obtaining alumina (Al₂O₃) from bauxite, hereinafter "bauxite residue", to facilitate its disposal as non-hazardous waste. Particularly, the bauxite residue is that generated in the Bayer process for obtaining alumina from bauxite, which is also known as "red mud". The method further enables recovery of alumina as well as caustic soda from bauxite residue.

### Background of the invention

In the Bayer process, alumina is extracted from naturally occurring bauxite ore by leaching the bauxite ore in a leaching vessel, at elevated temperature and pressure, with a strong solution of caustic soda (NaOH) to form sodium aluminate in the solution. The impurities remain insoluble and form the red mud. The red mud is then separated from the solution by decantation and filtration. The solution formed at high leach temperature is cooled and thus becomes supersaturated at lower temperatures. The cooled solution is then seeded in a precipitator vessel with aluminum hydroxide (Al(OH)₃) crystals and agitated. A portion of the alumina gradually crystallizes and precipitates out of the solution in hydrated form and is separated from the spent caustic liquor by filtration. After washing, the alumina hydrate is calcined to oxide form to provide a very pure alumina.The alumina may also be collected and sold in the hydrate form. The spent caustic liquor and wash water, after concentration, are recycled and used for another leaching of bauxite ore.

Conventionally, the red mud is removed from the leached slurry of bauxite and caustic soda/sodium aluminate liquor using a series of thickeners/washers or pressure filters. Hydraulic thickeners are large vessels requiring large volumes of water to achieve proper treatment and thickening of the red mud. These thickeners rely heavily upon the settling characteristics of the red mud and suffer major upsets when these characteristics change. The large volumes of water associated with the thickeners must also be reduced by steam heating/evaporation.

It has been conventional practice to dispose of treated, i.e., washed and thickened, red mud by discharging into a tailing pond. In a tailing pond, the red mud settles out by gravity and the supernatant liquor is returned to the Bayer process for reuse, or it may be disposed of after proper treatment. As the red mud settles, it entrains alumina and caustic soda which were present in the liquid portion of the red mud slurry when it was pumped into the tailing pond. Thus, considerable quantities of alumina and caustic soda are lost due to occlusion in the red mud tailing pond which represents a significant monetary loss. Aside from these losses, the pond water itself poses a disposal problem from an environmental standpoint due to its high alkalinity. Groundwater runoff is not permissible unless the caustic pond water is neutralized.

In addition to the alumina and caustic soda losses as well as the negative environmental impact, conventional red mud tailing ponds demand substantial land usage on a continuous basis. For example, a typical tailing pond may occupy about 500,000-700,000 m² or more, which is non-recoverable land. In addition to the land costs, significant costs are realized in constructing and maintaining the dikes which retain the tailing pond water and the red mud.

Hence, there is a need for a better way for disposal of bauxite residue or red mud which does not necessitate the use of a tailing pond and, preferably, also enables recovery of alumina from bauxite residue or red mud.

### Summary of the invention

It is an object of the present invention to provide a better way for disposal of bauxite residue which does not necessitate the use of a tailing pond and thereby solving the problems associated with the conventional way for disposal of bauxite residue.

The present invention provides a method for treating bauxite residue which facilitates its disposal as a non-hazardous waste and enables recovery of alumina therefrom without necessitating the use of a tailing pond.

The method comprises the steps of
(A-i) treating the bauxite residue, which can be the red mud generated in the Bayer process or reclaimed from a tailing pond, with phosphoric acid to obtain a leach slurry, and
(A-ii) treating the leach slurry with caustic soda to obtain a treated slurry.

The bauxite residue may be treated with phosphoric acid at near boiling temperature (80 - 95°C) at atmospheric pressure at a pH of 2.0 - 3.0, preferably 2.5 - 2.7, for up to 2 hours under agitation.

The leach slurry may be treated with caustic soda at near boiling temperature (80 - 95°C) at atmospheric pressure at a pH of 11 and above for up to 2 hours under agitation.

The treated slurry may then be separated into a solid portion and a liquid portion.

The solid portion of the treated slurry may be subjected to a process for obtaining a residue containing iron and/or titanium comprising the following steps:
(B-i) treating the solid portion of the treated slurry with sulfuric acid to obtain an acidic slurry, and
(B-ii) separating the acidic slurry into a solid portion, which is the residue containing iron and/or titanium, and a liquid portion containing phosphoric acid.

The treatment of the solid portion of the treated slurry with sulfuric acid under standard conditions may end once sulfuric acid is used up and it may take up to 1 hour.

The residue containing iron and/or titanium may either be discarded as non-hazardous waste or treated further for recovering the iron and/or titanium. The liquid portion containing phosphoric acid may be recycled to be reused, for example, in step (A-i) above.

The liquid portion of the treated slurry, containing sodium phosphate, sodium aluminate and sodium silicate, may be subjected to a process for recovering alumina and caustic soda comprising the following steps:
(C-i) treating the liquid portion of the treated slurry with lime to obtain a lime treated slurry,
(C-ii) separating the lime treated slurry into a solid portion and a liquid portion,
(C-iii) hydrolyzing the liquid portion of the lime treated slurry to precipitate aluminum hydroxide and obtain a hydrolyzed slurry, and
(C-iv) separating the hydrolyzed slurry into a solid portion containing aluminum hydroxide and a liquid portion containing caustic soda.

Lime may be added to the liquid portion of the treated slurry until a pH of 11.5 - 12.0 is reached. The treatment of the liquid portion of the treated slurry with lime may take place under standard conditions for up to 1 hour.

Alumina can be recovered from the solid portion containing aluminum hydroxide. The liquid portion containing caustic soda may be recycled to be reused, for example, in step (A-ii) above.

The hydrolyzing step may be the same as that used in the Bayer process for precipitating alumina in hydrated form, in other words aluminium hydroxide, as explained earlier in the first paragraph under "Background of the invention".

The process for recovering alumina and caustic soda may further comprise the following steps for recovering phosphoric acid:
(C-v) treating the solid portion of the lime treated slurry, containing calcium silicate and calcium phosphate, with sulfuric acid to obtain an acidic slurry, and
(C-vi) separating the acidic slurry into a solid portion containing gypsum and/or calcium silicate and a liquid portion containing phosphoric acid.

The treatment of the solid portion of the lime treated slurry with sulfuric acid under standard conditions may end once sulfuric acid is used up and it may take up to 1 hour.

The solid portion containing gypsum and/or calcium silicate may be discarded as non-hazardous waste. The liquid portion containing phosphoric acid may be recycled to be reused, for example, in step (A-i) above.

The solid portion of the treated slurry, i.e. the treated bauxite residue or red mud, has minimized amounts of entrapped alumina and caustic soda. Alumina and caustic soda can be recovered from the liquid portion of the treated slurry, thereby reducing alumina and caustic soda losses. As elaborated earlier, the treated bauxite residue or red mud may be subjected to a process for obtaining a residue containing iron and/or titanium which allows recovery of phosphoric acid at the same time. The treated bauxite residue or red mud may also be use as a feed in a process for recovering iron and/or titanium due to its rich iron and/or titanium content.

These as well as other advantages and attributes of the present invention will become readily apparent in the following detailed description and flowsheet.

### Brief description of the drawings

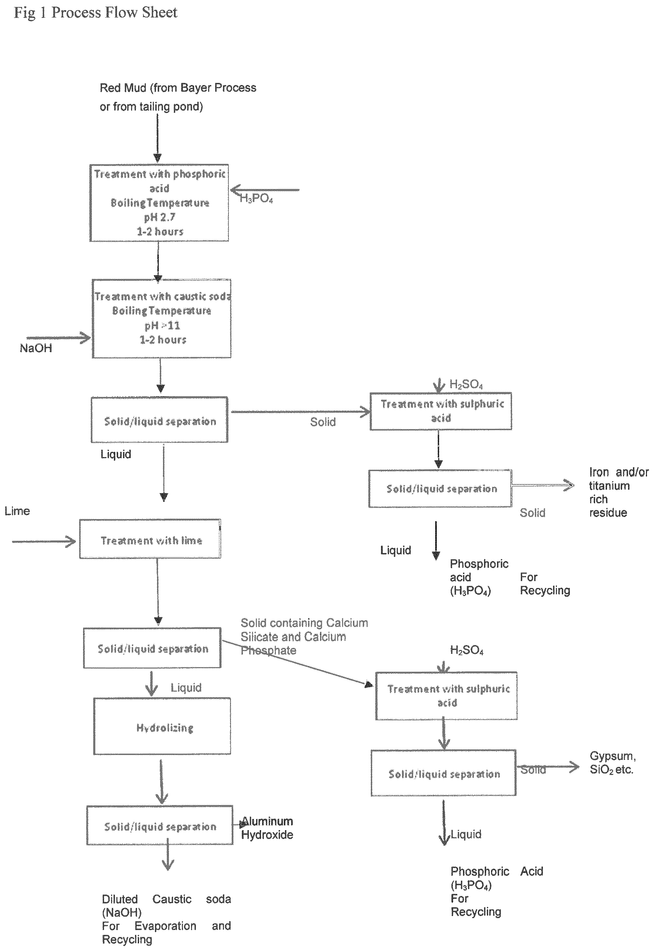

Figure 1 is a flowsheet schematically illustrating a preferred embodiment of the method of the present application.

### Detailed description of the invention

A preferred embodiment of the method of the present application as illustrated in Figure 1 is explained below.
1. Red mud generated in the Bayer Process or reclaimed from a tailing pond is fed to a treatment tank where the feed is treated with phosphoric acid at near boiling temperature (85 - 95°C) at atmospheric pressure and at a pH of around 2.7 for 1-2 hours. The treatment with phosphoric acid may also be optimally conducted at lower temperatures.
2. The slurry from phosphoric acid treatment stage in step 1 above is then treated with caustic soda at near boiling temperature (85 - 95°C) at atmospheric pressure and at a pH above 11 for 1-2 hours. The treatment with caustic soda may also be optimally conducted at lower temperatures.
3. Following solid/liquid separation, the solid fraction is treated with sulfuric acid to convert calcium phosphate to calcium sulfate and phosphoric acid. Phosphoric acid is recycled to step 1 above. The solid fraction which is rich in iron and titanium is either discarded as non-hazardous waste or treated further to recover the iron and titanium.
4. The liquid fraction from step 3 above is then treated with lime and then separated by filtration into a solid fraction and a liquid fraction.
5. The liquid fraction from step 4 is hydrolyzed and then filtered to obtain a solid fraction containing aluminum hydroxide and a liquid fraction.
6. The liquid fraction from step 5 above, containing caustic soda, is then filtered, part of which is recycled back to step 2 of the process above, while the remaining part can be sold.
7. The solid fraction from step 4 above, containing mainly calcium silicate and calcium phosphate, is treated with sulfuric acid to recover phosphoric acid to be reused in the process. A solid fraction obtained after the sulfuric acid treatment, containing mainly gypsum and calcium silicate, is either discarded or treated further to recover the calcium silicate as an economical value.

Any excess water will have to be evaporated to maintain acceptable plant operating volume. Thus, evaporation facilities or additional wash stages which will reduce the amount of water required will have to be provided.

The invention will now be further explained in the following example. This example is only intended to illustrate the invention and should in no way be considered to limit the scope of the invention.

### Example

1. A 100 gram red mud sample was treated with 50 gram 85% phosphoric acid and 700 cm³ (cc) water. The treatment was conducted at atmospheric pressure at an elevated temperature of 95 degrees Celsius for 1 hour. The pH was 2.5-2.7.
2. The treatment of the slurry was continued for another one hour after the addition of 45 gram caustic soda. The treatment was conducted at atmospheric pressure at an elevated temperature of 95 degrees Celsius for 1 hour. The pH was above 11.
3. The treated slurry was then filtered to separate solid and liquid and the solid was washed with fresh water.
4. The solid was then treated with 25 gram sulfuric acid for one hour and the slurry was filtered.
5. The residue was then dried and analyzed.

**Table: Analysis of the red mud sample and the residue**

| | Red Mud (100g) | Residue (50g) | Recovery into solution |
|---|---|---|---|
| Al₂O₃ (%) | 19.50% | 4.32% | 88.96% |
| CaO (%) | 1.20% | 0.99% | |
| Fe₂O₃ (%) | 35.50% | 70.75% | |
| Na₂O (%) | 10.20% | 1.32% | 93.55% |
| SiO₂ (%) | 15.50% | 3.01% | 90.32% |
| TiO₂ (%) | 5.40% | 8.98% | |
| P₂O₅ (%) | 0.15% | 0.90% | |
| V₂O₅ (%) | 0.08% | 0.10% | |
| Other | 12.47% | 9.63% | |

The table shows that nearly 89% of alumina, 94% of caustic soda and 90% of silica are recovered from the red mud.

## Claims

1. A method for treating bauxite residue comprising the steps of
(i) treating the bauxite residue with phosphoric acid to obtain a leach slurry, and
(ii) treating the leach slurry with caustic soda to obtain a treated slurry.

2. A method according to claim 1, wherein the bauxite residue is treated with phosphoric acid at a pH of 2.0 - 3.0.

3. A method according to claim 1, wherein the bauxite residue is treated with phosphoric acid at a pH of 2.5 - 2.7.

4. A method according to any one of claims 1 to 3, wherein the bauxite residue is treated with phosphoric acid at an elevated temperature of 80 - 95°C at atmospheric pressure.

5. A method according to any one of claims 1 to 4, wherein the leach slurry is treated with caustic soda at a pH of 11 and above.

6. A method according to any one of claims 1 to 5, wherein the leach slurry is treated with caustic soda at an elevated temperature of 80 - 95°C at atmospheric pressure.

7. A method according to any one of claims 1 to 6, wherein the bauxite residue is treated with phosphoric acid for up to 2 hours.

8. A method according to any one of claims 1 to 7, wherein the leach slurry is treated with caustic soda for up to 2 hours.

9. A method according to any one of claims 1 to 8, further comprising the following steps for obtaining a residue containing iron and/or titanium:
(i) separating the treated slurry into a solid portion and a liquid portion;
(ii) treating the solid portion of the treated slurry with sulfuric acid to obtain an acidic slurry;
(iii) separating the acidic slurry into a solid portion, which is the residue containing iron and/or titanium, and a liquid portion containing phosphoric acid.

10. A method according to any one of claims 1 to 9, further comprising the following steps for recovering alumina and caustic soda:
(i) separating the treated slurry into a solid portion and a liquid portion;
(ii) treating the liquid portion of the treated slurry with lime to obtain a lime treated slurry;
(iii) separating the lime treated slurry into a solid portion and a liquid portion;
(iv) hydrolyzing the liquid portion of the lime treated slurry to obtain a hydrolyzed slurry; and
(v) separating the hydrolyzed slurry into a solid portion containing aluminum hydroxide and a liquid portion containing caustic soda.

11. A method according to claim 10, further comprising the following steps for recovering phosphoric acid:
(i) treating the solid portion from the lime treated slurry with sulfuric acid to obtain an acidic slurry;
(ii) separating the acidic slurry into a solid portion containing gypsum and/or calcium silicate and a liquid portion containing phosphoric acid.
